# EUROPÄISCHE PATENTSCHRIFT

(11) **EP 4 357 695 B1**
(45) Veröffentlichungstag und Bekanntmachung des Hinweises auf die Patenterteilung: **18.06.2025**
(21) Anmeldenummer: 23204967.6
(22) Anmeldetag: 20.10.2023
(51) Int. Cl.: F24H 9/02, F24H 9/06, B29C 44/12, B29C 44/18, F16L 59/02, F24H 4/04, F24D 17/02, F24H 1/18, B29K 75/00, F28D 7/02, F28D 20/00

(54) **WARMWASSERSPEICHER**
HOT WATER TANK
BALLON D'EAU CHAUDE

(30) Priorität: 20.10.2022 FR 2210846
(43) Veröffentlichungstag der Anmeldung: 24.04.2024
(73) Patentinhaber: Robert Bosch GmbH, 70442 Stuttgart (DE)
(72) Erfinder: Huon, Nicolas, 29410 St. Thegonnec (FR); Callarec, Laurent, 29410 St. Thegonnec (FR); Carris Raval, Eline, 29410 St. Thegonnec (FR)

(56) Entgegenhaltungen:
- EP-A1- 3 462 103
- CN-U- 216 187 893
- DE-U1- 202009 002 954
- JP-A- S5 548 089

## Beschreibung

### Gebiet der Erfindung

Die vorliegende Erfindung bezieht sich auf einen Warmwasserspeicher.

### Stand der Technik

Derzeit sind Warmwasserspeicher, die mit einer in eine Anlage integrierten Wärmepumpe kombiniert sind, mit einer Verkleidung versehen, die an die Verkleidung der Wärmepumpe angepasst ist.

Da nun aber die Wärmepumpenhersteller und die Warmwasserspeicherhersteller nicht identisch sind, ist es erforderlich, die Warmwasserspeicher an die Wärmepumpe, mit der sie kombiniert werden, anzupassen.

Dazu werden die mit ihrer isolierenden Hülle versehenen Warmwasserspeicher in einen Metallrahmen eingebaut, der aus einem Sockel und Seitenkanten zur Aufnahme von Verkleidungsseitenwänden gebildet ist, und das Ganze wird durch ein Oberteil abgedeckt, das an den Holmen befestigt ist und die Seitenwände aufnimmt.

Dieses Installationssystem ist relativ kompliziert, denn es erfordert zunächst das Aufstellen des Rahmens und dann das Befestigen der Verkleidungswände an dem Rahmen.

Aus der EP 3 462 103 A1 ist eine Warmwasserversorgungseinheit (100), bestehend aus einem Heizmechanismus (710), einem Tank (300), einem Wasserrohr (720) mit dem Tank verbunden; thermischer Isolator (400) haftend an den Tank anschließt und diesen im Wesentlichen umgibt; einem Hauptrahmen (600) zur Unterstützung des Heizmechanismus, einer Stützplatte (500) und einem Gehäuse (200) zur Aufnahme des Heizmechanismus, des Tanks, die mindestens eine Wasserleitung, der Wärmeisolator, die Hauptrahmen und die Trägerplatte, bekannt.

Aus der DE 20 2009 002 954 U1 ist eine Wärmeisolationshülle (10) für einen, insbesondere im wesentlichen zylindrischen, Körper, insbesondere einen Heißwasserbehälter (12), umfassend mindestens zwei, vorzugsweise vier, Hüllensegmente (22, 24, 26, 28), wobei jedes Hüllensegment (22, 24, 26, 28) entweder eine den Körper zumindest bereichsweise umgebende Isolierschicht (62) aus, vorzugsweise weichem oder halbhartem, formgeschnittenen Schaumstoff sowie eine außen um die Isolierschicht (62) angeordnete und mit dieser verbundene, vorzugsweise vorgeformte Außenverkleidung (64) oder eine den Körper zumindest bereichsweise umgebende Isolierschicht aus Vliesstoff, vorzugsweise Faservlies, insbesondere Polyester-Faservlies, oder Schafs-wolle, sowie eine außen um die Isolierschicht angeordnete und mit dieser verbundene vorgeformte Außenverkleidung aufweist, bekannt.

Aus der CN 216 187 893 U ist ein Reaktionskessel aus organischem Silikonöl und einem isolierter Tankkörper bekannt, bei dem eine erste Isolationsschicht mit der Außenwand des Körpers und der ersten Isolationsschicht fest verbunden ist. Eine Schale ist mit der Außenwand der Dämmschicht und der Schale fest verbunden, eine zweite Wärmedämmschicht ist fest mit der Außenwand und der ersten Wärmedämmschicht verbunden.

Die JP S55 48089 A zeigt einen Isolierkörper, der gebildet wird, indem ein Substrat durch magnetisches Verbinden von geformten Wärmedämmstoffen mit Verbindungsenden aus magnetischen Materialien miteinander gebildet wird.

### Aufgabe der Erfindung

Aufgabe der vorliegenden Erfindung ist es, einen Warmwasserspeicher zu entwickeln, der mit einer Wärmepumpe kombiniert werden kann und dessen Gehäuse einfach an das Gehäuse der Wärmepumpe, für die er bestimmt ist, angepasst werden kann.

### Offenbarung der Erfindung

Dazu betrifft die Erfindung einen Warmwasserspeicher, der einen vertikalen zylindrischen Behälter umfasst, der mit einem Tauscher ausgestattet ist, der von einer externen Wärmequelle gespeist wird, wobei dieser Behälter mit einer Isolation ausgestattet ist, die von einer Verkleidung bedeckt wird, wobei der Speicher dadurch gekennzeichnet ist, dass er umfasst: ein Modul, das aus dem Behälter und aus einer isolierenden Hülle zusammengesetzt ist, die direkt an den Behälter geschäumt ist, um ein rechteckiges Modul zu bilden, eine Verkleidung, die mindestens einen Sockel, der das Modul trägt, zwei Seitenteile und ein Oberteil, das von den vormontierten Wärmeträgerflüssigkeits- und Wasseranschlüssen durchdrungen wird, umfasst, wobei die Seitenteile aus Blech mit dem Sockel durch mechanische Verbindungen verbunden sind, wobei das Oberteil mit den Seitenteilen durch mechanische Verbindungen verbunden ist, wobei die Seitenteile mit dem Modul durch magnetische Befestigungen verbunden sind, die in den oberen Teil der isolierenden Hülle der Seitenteile des Moduls integriert sind.

Der erfindungsgemäße Warmwasserspeicher hat den Vorteil, dass er sich durch seine Verkleidung, die sich ganz einfach und austauschbar mit dem in das Modul integrierten Behälter kombinieren lässt, ganz einfach an die Umgebung, in der er installiert wird, anpasst.

Gemäß einem weiteren Merkmal ist die mechanische Verbindung, die jedes Seitenteil mit dem Rand des Sockels verbindet, eine Schlitz-und-Lasche-Verbindung, wobei das Seitenteil des Sockels mindestens einen Schlitz hat und der untere Rand der Seitenwand eine Lasche hat, die in diesen Schlitz greift.

Gemäß einem weiteren Merkmal ist das Oberteil an jedem seitlichen Rand mit dem oberen Rand der Seitenwand durch eine mechanische Verbindung durch Rasten von Stiften, die von den Rändern des Oberteils getragen werden, verbunden, die in komplementär ausgebildete Rastausnehmungen reichen, die in der Oberseite des oberen Randes der Seitenwände ausgeführt sind.

Gemäß einem weiteren Merkmal sind die beiden Seitenteile des Moduls im oberen Teil mit magnetischen Befestigungen versehen, die in die isolierende Hülle integriert sind.

Diese verschiedenen mechanischen Verbindungen ermöglichen eine extrem einfache und schnelle Montage des Speichers mit seiner Verkleidung.

Gemäß einem Merkmal ist die magnetische Befestigung ein Einsatz in Form einer Lamelle, der zu einem umgekehrten V mit ebener Basis gebogen ist, an welcher der Magnet befestigt ist, und dessen beide Schenkel in die Dicke der isolierenden Hülle eingebettet sind.

Im Rahmen dieser magnetischen Befestigung haben die Schenkel umgebogene Enden und Fixierungsöffnungen, um die Fixierung des geschäumten Materials, aus dem die isolierende Hülle besteht, zu begünstigen.

Gemäß einem weiteren Merkmal umfasst das Modul einen Behälter, der mit mindestens einem Paar Rohrenden, die mit dem Tauscher verbunden sind, mit dem Ende des Kaltwassereinlaufrohrs und mit dem Ende des Warmwasserauslaufrohrs versehen ist, die in Aussparungen vormontiert sind und nach dem Bilden der isolierenden Hülle an Verbindungsrohre angeschlossen werden, die in Aussparungen verlaufen.

Die Erfindung gilt auch für ein Werkzeug zum Einsetzen des Einsatzes in das Formwerkzeug; dieses Werkzeug umfasst einen Einsatzhalter, der mit einer Platte versehen ist, die mit Anschlägen ausgestattet ist, die den Platz der Basis des Einsatzes begrenzen, einen Elektromagneten, der unter dem Platz des Einsatzes angeordnet ist, einen Sensor, um das Vorhandensein des Einsatzes an seinem Platz auf der Platte zu detektieren, und einen Schalter, um die Betätigung des Elektromagneten zu steuern, um den Einsatz zu halten.

### Kurze Beschreibung der Zeichnungen

Die vorliegende Erfindung wird nachstehend ausführlicher anhand einer Ausführungsform eines mit einer Wärmepumpe kombinierten Warmwasserspeichers beschrieben, der in den beigefügten Zeichnungen dargestellt ist. In diesen zeigen:
[Fig. 1] eine perspektivische Ansicht des Warmwasserspeichers
[Fig. 2] eine Schnittansicht des Behälters des Speichers,
[Fig. 3] eine Axialschnittansicht des Speichermoduls,
[Fig. 4] eine Draufsicht des Speichermoduls,
[Fig. 5] Seitenansichten und perspektivische Ansichten der Seitenteile des Moduls mit den Aussparungen,
[Fig. 6] perspektivische Ansichten des Moduls mit den Rohren, mit denen die Aussparungen versehen sind,
[Fig. 7] schematische Schnittansichten des Warmwasserspeichers und Detailansichten der Montage der Seitenteile,
[Fig. 8] Ansichten der Einsatzes,
[Fig. 9] eine Ansicht der Vorrichtung zur Befestigung des Einsatzes in dem Schäumwerkzeug des Moduls,
[Fig. 10] Schritte der Montage des Warmwasserspeichers.

### Beschreibung einer Ausführungsform

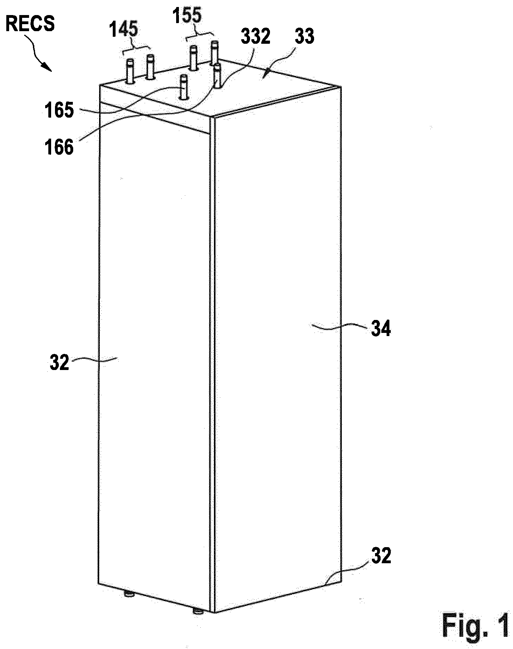

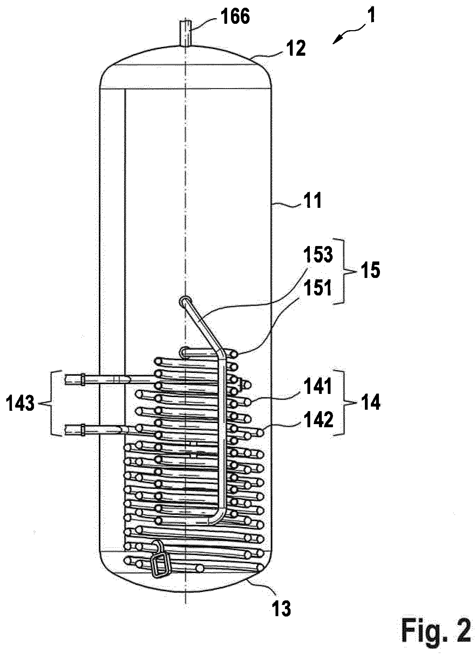

Gemäß Fig. 1 betrifft die Erfindung einen Warmwasserspeicher RECS, der einen vertikalen zylindrischen Behälter 1 (Fig. 2) in einer geschäumten isolierenden Hülle 2 umfasst, die ein aufrecht stehendes quaderförmiges Modul M bilden, das von einer Verkleidung 3 umgeben ist, die aus einem Sockel 31, auf dem das Modul M ruht, und zwei Seitenwänden 32, die mit dem Sockel und mit dem oberen Teil des Moduls M verbunden sind, zusammengesetzt ist; diese beiden Wände nehmen ein Oberteil 33 auf, das mit Bohrungen 332 versehen ist, die von den Enden der Rohre und Rohrpaare der Heizungskreise 145, 155 und Warmwasserkreise 165, 166 durchdrungen werden; die Vorderseite des Moduls M wird von einer Front 34 bedeckt, die mit dem Sockel 31 und mit dem Oberteil 33 verbunden ist; die Rückseite bleibt offen.

Gemäß Fig. 2 ist der Speicher RECS ein Behälter 1, der aus einem Zylinder 11 mit kreisförmigem Querschnitt in vertikaler Position besteht, der oben und unten durch eine Kalotte 12, 13 abgeschlossen wird. Die untere Kalotte 13 ist mit einem Ring 131 zu ihrer Auflage auf dem Sockel 31 verbunden, und die obere Kalotte 12 trägt das Warmwasserauslaufrohr 166.

Der Behälter 1 ist im unteren Teil mit einem ersten Wärmetauscher 14 ausgestattet, der mit einer nicht dargestellten Wärmepumpe verbunden ist, und mit einem zweiten Wärmetauscher 15, der mit einer Speisequelle wie einem Solarpanel verbunden ist.

In dem Beispiel ist der erste Tauscher 14, der den größten Teil der Energie von der Wärmepumpe liefern soll, aus zwei Schlangen 141, 142 in Reihe, die eine große Tauschfläche darstellen, mit geringer Kompaktheit im unteren Teil des Behälters 1 gebildet.

Der erste Tauscher 14 wird durch den zweiten Tauscher 15 ergänzt, der aus einer Schlange 151 gebildet ist, die in der Doppelschlange 141, 142 installiert ist und in Bezug auf diese in der Höhe versetzt ist.

Die Zirkulation der Wärmeträgerflüssigkeiten wird von einer Steuerung dieses Speichers zur Bereitstellung von Warmwasser verwaltet, um den Wärmeaustausch zum Warmwasser in dem Behälter 1 zu regeln.

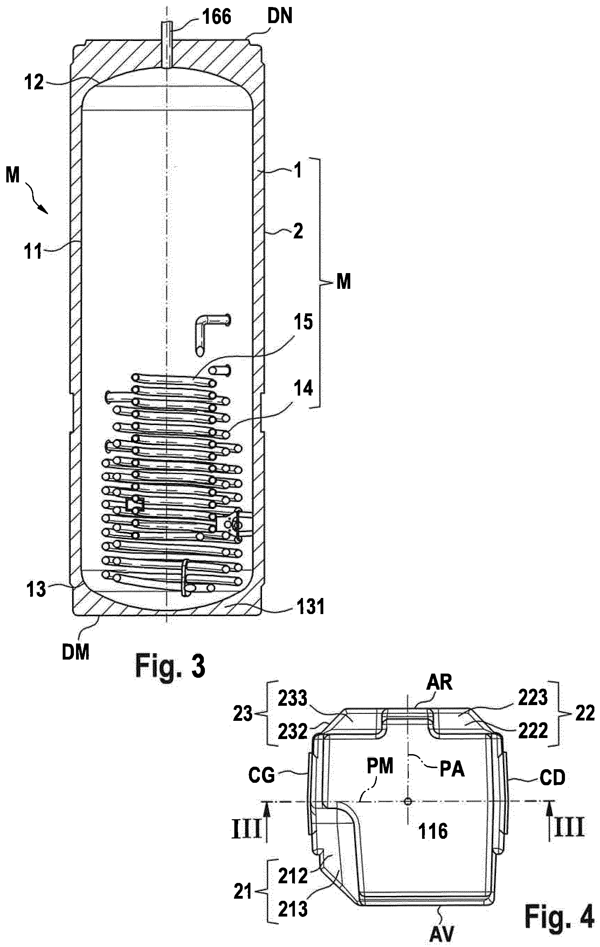

Gemäß Fig. 3 ist der Behälter 1 von einer isolierenden Hülle 2 umgeben, die auf den Behälter 1 durch Schäumen von Polyurethan in einem Formwerkzeug mit insgesamt rechteckigem Querschnitt aufgebracht wird. Dieses Formwerkzeug ist nicht dargestellt.

Diese isolierende Hülle 2 beinhaltet die Enden der Rohre, die von dem Behälter 1 getragen werden und paarweise zusammengefasst sind: das Paar 143 des ersten Tauschers 14, das Paar 153 des zweiten Tauschers 15, das Ende 163 des Kaltwasserzuleitungsrohrs und das Ende des Warmwasserauslaufrohrs 166. Die vormontierten Enden werden verschlossen, um den Isolierstoff zu schäumen. Sie kommen an der Oberfläche der isolierenden Hülle 2 in Aussparungen zum Vorschein, die für die Anschlüsse zum Oberteil DN des Moduls M hin verlängert sind.

Die Draufsicht des Moduls M von Fig. 4 zeigt die verschiedenen Formen der Kontur gemäß horizontalen Ebenen mit verschiedenen Höhenniveaus.

Diese Draufsicht zeigt die Mittelebene PM zwischen den Seitenteilen CG, CD, die durch das Warmwasserauslaufrohr 166 verläuft, und auch die Halbebene PA, die von dieser Leitung ausgeht und bis zur Rückseite AR reicht; diese Ebene entspricht der Verbindungsstelle des Deckels des Schäumwerkzeugs, der zweiteilig ist, um die Warmwasserauslaufleitung zu berücksichtigen.

Die Vorderseite des Moduls trägt das Bezugszeichen AV, die Rückseite das Bezugszeichen AR, das linke Seitenteil das Bezugszeichen CG und das rechte Seitenteil das Bezugszeichen CD.

Die globale Kontur des Moduls M ist in einen rechteckigen oder sogar quadratischen Querschnitt einbeschrieben, um an den Seitenteilen und an der Vorderseite sowie an der Oberseite mit der Verkleidung 3, 32, 33 versehen zu werden; das Modul M ruht auf dem Sockel 31, und die Rückseite des Moduls ist nicht unbedingt verkleidet.

An der vorderen linken Ecke (AV∩CG) ist eine Aussparung 21 mit Querschnitten 212, 213 zu sehen, die in der Höhe variabel ist, für die Kaltwasserzuleitung. An der hinteren rechten Ecke (CD∩AR) ist die Aussparung 22 mit Querschnitten 222, 223 für das Rohrpaar des ersten Wärmetauschers 14 zu sehen.

An der hinteren linken Ecke (CG∩AR) ist die Aussparung 23 mit Querschnitten 232, 233 für das Rohrpaar des zweiten Wärmetauschers 15 zu sehen, das zum Oberteil DN des Moduls hochgeführt ist.

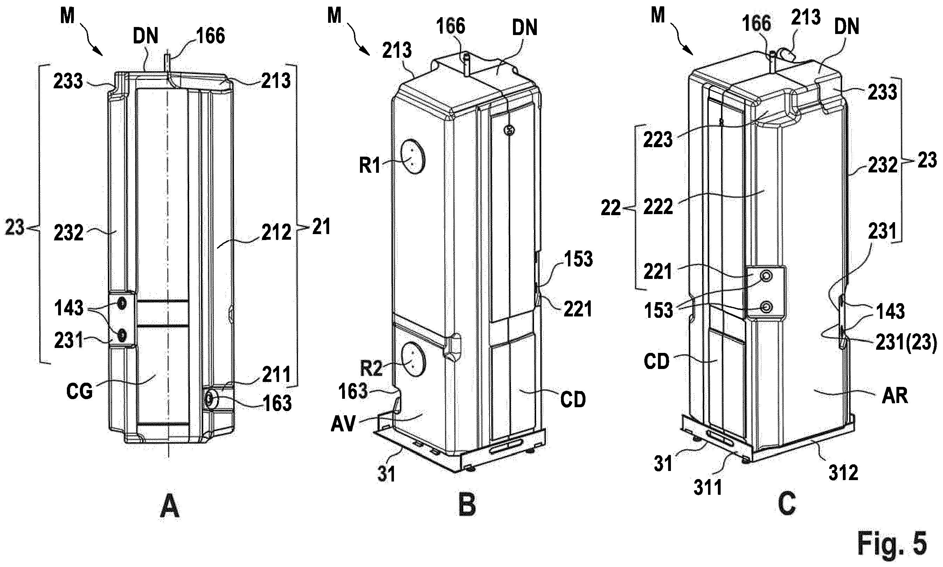

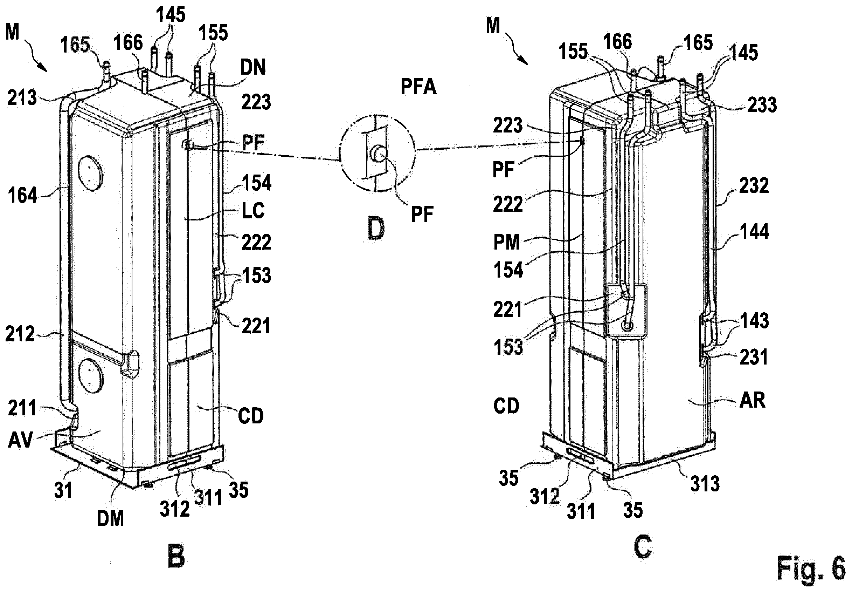

Einzelheiten dieser Aussparungen werden nachstehend anhand der perspektivischen und Seitenansichten der Fig. 5 und 6 beschrieben.

Gemäß Fig. 5 ist Teil A eine Seitenansicht des rechten Seitenteils CD des Moduls M, das an der rechten Ecke, im unteren Teil, eine untere Aussparung 211 in Form einer Abschrägung zeigt, an der das vormontierte Ende 163 des Kaltwasserzuleitungsrohrs 163 mündet.

Diese Aussparung 211 setzt sich nach oben zum Oberteil des Moduls M mit einer Abschrägung fort, die einen zur Aussparung 213 des Oberteils DN des Moduls hin aufsteigenden Gang 212 bildet.

Der hinteren linken Ecke (CG∩AR)) zeigt auf analoge Weise eine untere Aussparung 231 mit den beiden Enden 143 des Rohrpaars des ersten Wärmetauschers 14. Diese Aussparung 213 hat die Form einer Abschrägung an der Ecke des Moduls M und setzt sich mit einem zum Oberteil des Moduls M hin aufsteigenden offenen Gang 232 fort, der an einer oberen Stufe 233 unter dem Oberteil DN des Moduls M mündet.

Teil B zeigt perspektivisch die Vorderseite AV und das rechte Seitenteil CD des Moduls M. Die Vorderseite AV hat nur zwei kreisrunde Aussparungen R1, R2, die die Dicke der isolierenden Hülle 2 bis zum Behälter 1 durchdringen, um Temperaturfühler direkt an dem Behälter auf zwei verschiedenen Höhen zu installieren.

Unten an der linken Ecke der Vorderseite AV ist die Aussparung 211 mit dem Kaltwassereinlaufrohr 163 zu sehen, das genau an der Ecke liegt.

Die andere Ecke der Vorderseite AV hat keine besondere Funktion.

Die zweite Ecke des rechten Seitenteils CD hat eine Abschrägung 221 mit dem Eintritt der Enden 153 des Rohrpaars des zweiten Wärmetauschers 15. Diese Ecke ist in Teil C von Fig. 5 deutlicher zu sehen, mit der unteren Aussparung 221, die durch die Abschrägung der Ecke des Moduls M gebildet wird, die die beiden Enden 153 des Rohrpaars des zweiten Wärmetauschers 15 erkennen lässt.

Ein aufsteigender Gang 222 setzt die Aussparung 221 bis zum Oberteil DN des Moduls M fort.

Fig. 6 zeigt die Anbringung der Verbindungsrohre, die die Enden der an der isolierenden Hülle 2 mündenden Rohre mit dem Oberteil DN des Moduls M verbinden.

Teil B von Fig. 6 entspricht Teil B von Fig. 5, und Teil C von Fig. 6 entspricht Teil C von Fig. 5.

Teil B zeigt links die Aussparung 211, in die das Verbindungsrohr 164 eintritt, das sein Einlaufende 165 des Oberteils DN des Moduls M mit dem Kaltwassereinlaufrohr 163 an der Unterseite des Behälters 1 verbindet.

Das Rohr 164 ist in dem aufsteigenden Gang 212 aufgenommen; der obere Bogen des Rohrs 164 ist in der Aussparung 213 im Oberteil des Moduls M in Richtung der Mitte des Seitenteils CG festgelegt; das Anschlussende 165 befindet sich somit in der Querebene PM, die durch das Warmwasserauslaufrohr 166 verläuft.

In der rechten Ecke des rechten Seitenteils CD verbindet das Verbindungsrohrpaar 154 das Anschlussendenpaar 153 des zweiten Wärmetauschers 15, wobei es parallel auf beabstandeten Verläufen in dem aufsteigenden Gang 222 zu der Aussparung 223 des Oberteils DN hin verläuft und mit dem Anschlussendenpaar 155 endet.

Über ihren gesamten Verlauf, auch in der Aussparung 223 des Oberteils, haben die Rohre 154 keinen Kontakt. Sie sind bevorzugt wie die anderen Verbindungsrohre zwischen dem Behälter und dem Anschlussbereich am Oberteil DN des Moduls M mit einem Isolierstoff ummantelt.

Teil C von Fig. 6 zeigt an der rechten Ecke der Seite AR das Verbindungsrohrpaar 144 des ersten Wärmetauschers 14, das die vormontierten Enden 143 in der unteren Aussparung 231 verbindet und in dem offenen Gang 232 bis zu der Aussparung 233 des Oberteils DN entlang von parallelen, beabstandeten und isolierten Verläufen hochgeführt ist.

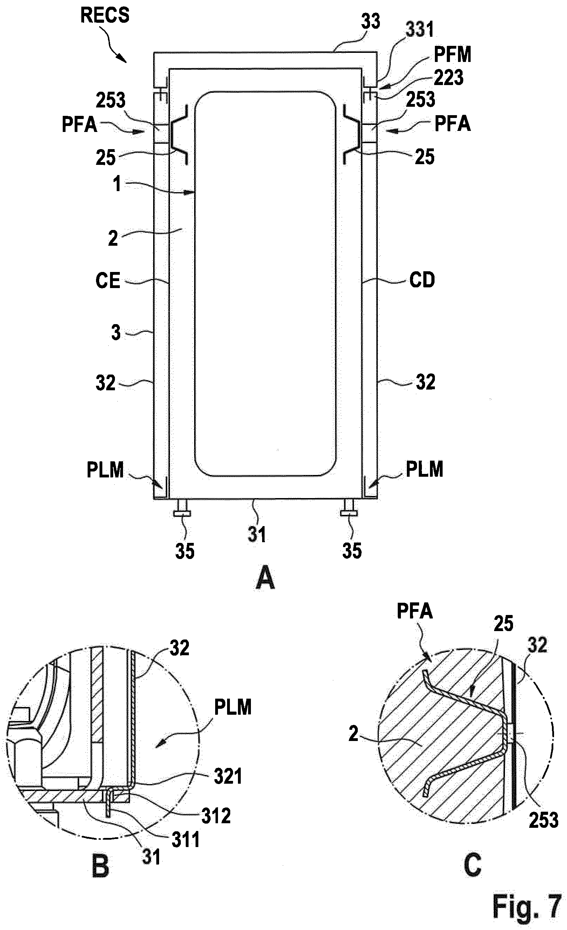

Die Ansichten von Fig. 5 und 6 zeigen das Modul M mit einer Linie PM analog zu einer Linie durch eine Querschnittsebene, die durch die Mitte der Seitenteile CD, CG verläuft. Diese Linie ist nur der Verlauf der Fügeebene des horizontalen Formwerkzeugs, in das der Behälter 1 mit den vormontierten Rohren der Tauscher gesetzt wird, um die Hülle 2 herzustellen (Fig. 3). Die Teile B, C von Fig. 6 zeigen auch einen magnetischen Befestigungspunkt PF im oberen Bereich des Seitenteils CD. Ein solcher Befestigungspunkt PF existiert auch an dem anderen Seitenteil CG, das nicht sichtbar ist. Der Befestigungspunkt beinhaltet einen Magneten, um den oberen Teil der Seitenwände 32 der Verkleidung 3 zu halten, wie dies anhand von Fig. 1 allgemein beschrieben wurde; diese Beschreibung ist im Fall der Fig. 7, 8, 9 detaillierter.

Fig. 5, 6 und 7 zeigen auch den Sockel 31, auf dem das Modul installiert ist. Dieser Sockel 31 ist eine Platte, die mit Füßen 35 versehen ist, die gegebenenfalls verstellbar sind. Die Vorderseite des Sockels 31 ist offen, aber seine beiden Seitenteile haben einen Rand 311, der mit einem Schlitz 312 zur Aufnahme einer Lasche des unteren Rands der Seitenwand versehen ist, um so einen mechanischen Befestigungspunkt PLM zu bilden, d. h. eine formschlüssige Verbindung; die Rückseite der Platte des Sockels hat ebenfalls einen Rand 313, der einen Anschlag bildet, der das Modul hält.

Wie der Vertikalschnitt des Moduls M in Fig. 3 zeigt, springt das Unterteil DM des Moduls ebenso wie das Oberteil DN leicht zurück. Dies ermöglicht es der Rückseite AR des Moduls, den hinteren Rand 313 leicht zu überlappen, und dem Oberteil DN, die Ränder des Oberteils 33 aufzunehmen, wie im Folgenden deutlich wird.

Der magnetische Befestigungspunkt PFA ist in Teil D vergrößert dargestellt. Der Magnet 253 wird von einem Einsatz 25 getragen, der beim Umschäumen in die Dicke der Hülle 2 eingebettet wird, ohne an den Behälter 1 geschweißt werden zu müssen oder mit diesem in direktem Kontakt zu sein.

Die Zeichnungen von Fig. 7 zeigen die Form der Verkleidung 3 und die Befestigung der Komponenten 32, 33, 34.

Teil A ist ein schematischer Schnitt des Speichers RECS, seines Behälters 1, seiner isolierenden Hülle 2 und des Sockels 31, an dem der untere Rand 321 der beiden Seitenwände 32 montiert ist, die mit einer Lasche 322 versehen ist, die in den Schlitz 312 reicht, um die formschlüssige Verbindung herzustellen (mechanischer Verbindungspunkt PLM). Der obere Teil der Wand 32 ist an dem Magneten 253 des Einsatzes 25 der Hülle 2 fixiert. Der umgebogene obere Rand 323 der Wand 32 nimmt den Rand 331 des Oberteils 33 durch Stifte auf, die in nicht beschriebene Aufnahmen einrasten, die in dem Rand 323 ausgeführt sind, so dass mechanische Befestigungspunkte PFM ausgeführt werden.

Das Modul M ist somit an den Seiten und an der Oberseite abgedeckt. Die gesamte Verkleidung 3 wird durch die Front 34 verstärkt und stabilisiert, die mit dem Sockel 31 über mechanische Befestigungspunkte verbunden ist, durch eine ähnliche formschlüssige Verbindung wie die der Seitenteile 32; im oberen Teil erfolgt die Befestigung durch Anschrauben an die Ränder 331 des Oberteils 33.

Teil B zeigt ein Beispiel einer formschlüssigen mechanischen Befestigung PLM des unteren Endes 321 der Wand 32 und der Front 34. Teil C zeigt eine Form eines Einsatzes 25 mit dem Magneten 253, der die Wand 32 aus Blech oder aus einem anderen Material mit, an der geeigneten Stelle, einer ferromagnetischen Platte zur Fixierung an dem Magneten 253 hält.

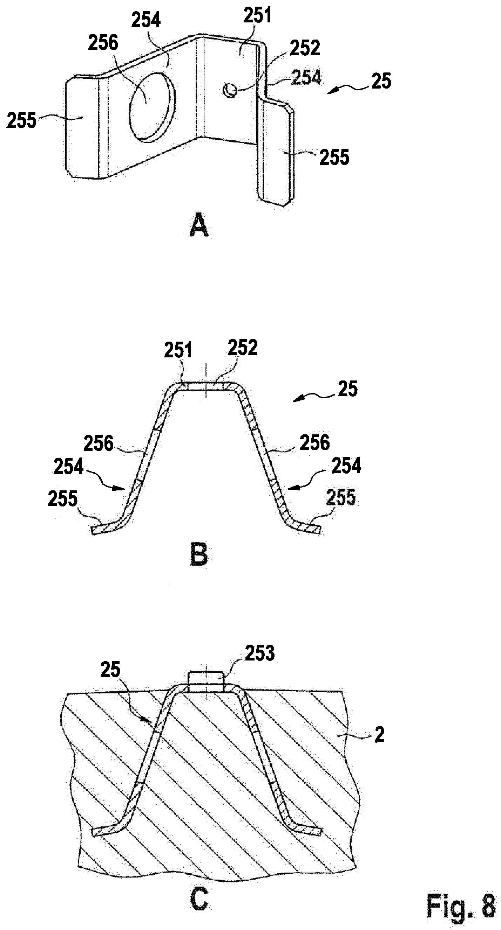

Fig. 8 zeigt ein Beispiel eines Einsatzes 25, der insgesamt die Form eines offenen V hat, das eine Basis 251 umfasst, die mit einer Befestigungsöffnung 252 für einen Magneten 253 versehen ist. Die Basis 251 geht in zwei V-förmige Schenkel 254 über, die jeweils mit einem umgebogenen Lappen 255 enden. Jeder Schenkel 254 hat eine Fixierungsöffnung 256. Der Einsatz ist in die Hülle 2 so integriert, dass seine Basis 251 bündig mit der Oberfläche der Hülle 2 ist und der anschließend installierte Magnet 253 erhaben ist, um gut in flächigen Kontakt mit der Wand 32 zu gelangen. Die Form des Einsatzes 25 begünstigt seine Fixierung in dem Material der Hülle 2, wie Teil C zeigt.

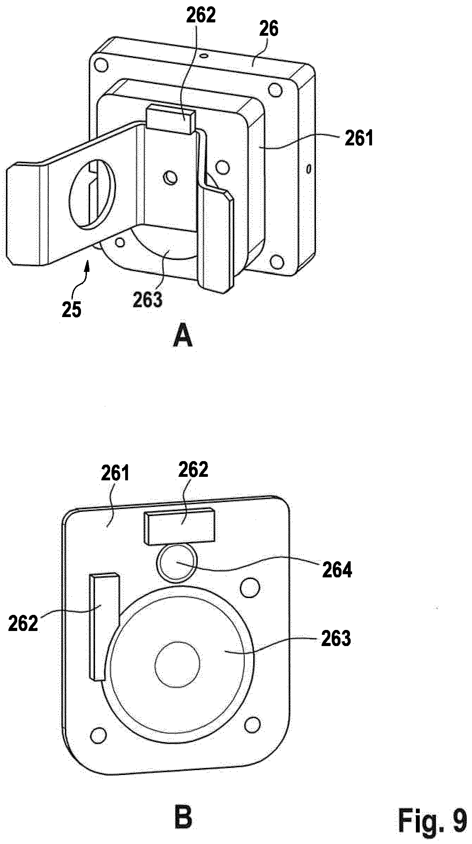

Fig. 9 zeigt ein Beispiel eines Halters 26, um den Einsatz 25 im Schäumwerkzeug zu halten. Der Halter 26, der in dem Formwerkzeug befestigt wird, beinhaltet eine Platte 261, um den Einsatz 25 aufzunehmen und während des Schäumens des Isolierschaums in dem Formwerkzeug in einer präzisen Position zu halten.

Die Platte 261 ist mit, beispielsweise, länglichen Anschlägen 262 versehen, die zwei Seiten des Platzes der Basis 251 des Einsatzes 25 begrenzen, sowie mit einem Elektromagneten, der mindestens größtenteils den Platz der Basis 251 des Einsatzes bedeckt, um diesen fest in seiner durch die Anschläge 262 definierten präzisen Position zu halten.

Die Platte 261 beinhaltet auch einen Sensor 263, der das Vorhandensein des Einsatzes 25 an seinem Platz detektiert. Der den Einsatz 25 befestigende Elektromagnet 263 wird aktiviert, wenn der Einsatz richtig sitzt.

Der Sensor 264 ermöglicht es auch zu überwachen, dass der Einsatz 25 während des Schäumens des Polyurethans an seinem Platz bleibt.

Am Ende des Schäumens wird der Elektromagnet 263 abgeschaltet. Wie bereits angegeben, begünstigen die Form des Einsatzes 25 und seine Reliefs und Öffnungen den Durchtritt und den Kontakt mit dem Schaum während seines Schäumens und gewährleisten eine einwandfreie Fixierung des Einsatzes.

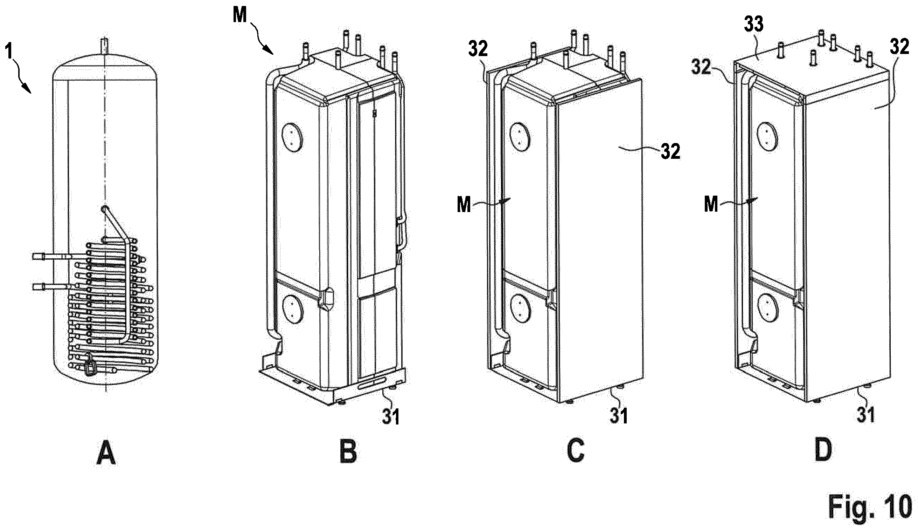

Fig. 10 zeigt die verschiedenen Schritte der Montage des Speichers RECS ausgehend von dem ausgestatteten Behälter 1 (Teil A), dann das Umschäumen durch Schäumen des Polyurethans um den Behälter 1 herum mit den Einsätzen 25 und die Installation des erhaltenen Moduls M auf dem Sockel 31 (Teil B).

Der folgende Schritt (Teil C) ist der des Anbringens der Wände 32 an den Seitenteilen des Moduls M und schließlich des Anbringens des Oberteils 33 auf den Oberseiten der Wand 32. Der letzte Schritt ist das Anbringen der Front 34.

### Bezugszeichenliste der wichtigsten Teile

RECS Warmwasserspeicher
1 Behälter
11 Zylinder
12 Obere Kalotte
13 Untere Kalotte
131 Ring
14 Erster Tauscher
141 Erste Schlange
142 Zweite Schlange
143 Vormontiertes Rohrendenpaar
144 Verbindungsrohrpaar
145 Anschlussenden
15 Zweiter Tauscher
151 Schlange
153 Vormontiertes Rohrendenpaar
154 Verbindungsrohrpaar
155 Anschlussenden
16 Warmwasserkreislauf
163 Vormontiertes Kaltwasserzuleitungsrohr
164 Kaltwasserverbindungsrohr
165 Anschlussende des Kaltwasserrohrs
166 Vormontiertes Warmwasserauslaufrohr
2 Isolierende Hülle
21 Aussparung des Kaltwasserrohrs
211 Untere Aussparung
212 Aufsteigender Gang
213 Aussparung im Oberteil zur Mitte des Seitenteils hin
22 Aussparung für das Rohrpaar des ersten Tauschers
221 Abschrägung
222 Aufsteigender Gang
223 Obere Stufe
23 Aussparung für das Rohrpaar des zweiten Tauschers
231 Abschrägung
232 Aufsteigender Gang
233 Obere Stufe
24 Integrierter Ring / Halter des Behälters
25 Einsatz
251 Basis
252 Montageöffnung des Magneten
253 Magnet
254 Schenkel
256 Fixierungsöffnung
253 Lappen
26 Einsatzhalter
261 Platte
262 Anschlag
263 Elektromagnet
264 Sensor
3 Verkleidung
31 Sockel
311 Seitenteil
312 Schlitz
313 Hinterer Rand
32 Seitenwand
321 Unterer Rand
322 Oberer Rand
33 Oberteil
331 Seitlicher Rand
332 Vorderer Rand
333 Bohrungen
34 Front
AR Rückseite
AV Vorderseite
CD Rechtes Seitenteil
CG Linkes Seitenteil
M Modul
DN Oberteil des Moduls
DM Unterteil des Moduls
PA Fügeebene
PM Vertikale Mittelebene
PFA Magnetischer Befestigungspunkt
PFM Mechanischer Befestigungspunkt
PLM Mechanischer Verbindungspunkt
X-Achse Richtung senkrecht zur Front des Speichers
Y-Achse Querrichtung des Speichers
Z-Achse Vertikale Richtung des Speichers

## Patentansprüche

1. Warmwasserspeicher (RECS), umfassend einen vertikalen zylindrischen Behälter (1), der mit einem Tauscher (14) ausgestattet ist, der von einer externen Wärmequelle gespeist wird, wobei der Behälter (1) mit einer Isolation ausgestattet ist, die von einer Verkleidung (3) bedeckt wird,
wobei der Speicher (RECS) Folgendes umfasst:
A. ein Modul (M), das aus dem Behälter (1) und aus einer isolierenden Hülle (2) zusammengesetzt ist, die direkt an den Behälter (1) geschäumt ist, um ein quaderförmiges Modul (M) zu bilden,
B. eine Verkleidung (3), umfassend mindestens
- einen Sockel (31), der das Modul (M) trägt,
- zwei Seitenwände (32) und
- ein Oberteil (33), das von den vormontierten Wärmeträgerflüssigkeits- und Warmwasseranschlüssen durchdrungen wird,
C. wobei die Seitenwände (32) aus Blech mit dem Sockel (31) durch mechanische Verbindungen (LM) verbunden sind,
**dadurch gekennzeichnet, dass** das Oberteil (33) mit den Seitenwänden (32) durch mechanische Verbindungen (LM) verbunden ist, und
wobei die Seitenwände (32) mit dem Modul (M) durch magnetische Befestigungen (FA) verbunden sind, die in den oberen Teil der isolierenden Hülle (2) der Seitenteile (CG, CD) des Moduls (M) integriert sind.

2. Speicher (RECS) nach Anspruch 1,
**dadurch gekennzeichnet, dass**
die mechanische Verbindung (LM), die jeder Seitenwand (32) mit dem Rand des Sockels (31) verbindet, eine Schlitz-und-Lasche-Verbindung ist, wobei das Seitenteil (311) des Sockels (31) mindestens einen Schlitz (312) hat und der untere Rand (321) der Seitenwand (32) eine Lasche (3211) hat, die in diesen Schlitz (312) greift.

3. Speicher (RECS) nach Anspruch 1,
**dadurch gekennzeichnet, dass**
das Oberteil (33) an jedem seitlichen Rand (331) mit dem oberen Rand (322) der Seitenwand (32) durch eine mechanische Verbindung (LM) durch Rasten von Stiften, die von den Rändern des Oberteils (33) getragen werden, verbunden ist, die in komplementär ausgebildete Rastausnehmungen reichen, die in der Oberseite des oberen Randes (322) der Seitenwände (32) ausgeführt sind.

4. Speicher (RECS) nach Anspruch 1,
**dadurch gekennzeichnet, dass**
die beiden Seitenteile (CG, CD) des Moduls (M) im oberen Teil mit magnetischen Befestigungen (FA) versehen sind, die in die isolierende Hülle (2) integriert sind.

5. Speicher (RECS) nach Anspruch 4,
**dadurch gekennzeichnet, dass**
die magnetische Befestigung (FA) ein Einsatz (25) in Form einer Lamelle ist, der zu einem umgekehrten V mit ebener Basis (251) gebogen ist, an welcher der Magnet (253) befestigt ist, und dessen beide Schenkel (254) in die Dicke der isolierenden Hülle (2) eingebettet sind.

6. Speicher (RECS) nach Anspruch 5,
**dadurch gekennzeichnet, dass**
die Schenkel (254) umgebogene Enden (255) und Fixierungsöffnungen (256) haben, um die Fixierung des geschäumten Materials, aus dem die isolierende Hülle (2) besteht, zu begünstigen.

7. Speicher (RECS) nach Anspruch 1,
**dadurch gekennzeichnet, dass**
der Behälter ein vertikaler zylindrischer Behälter ist, der mit mindestens einem Tauscher (14) ausgestattet ist, der von einer Wärmepumpe gespeist wird.

8. Speicher (RECS) nach Anspruch 1,
**dadurch gekennzeichnet, dass**
das Modul (M) einen Behälter (1) umfasst, der mit mindestens einem Paar Rohrenden, die mit dem Tauscher verbunden sind, mit dem Ende des Kaltwassereinlaufrohrs und mit dem Ende des Warmwasserauslaufrohrs (143, 153, 165, 166) versehen ist, die in Aussparungen vormontiert sind und nach dem Bilden der isolierenden Hülle (2) an Verbindungsrohre (144, 154) angeschlossen werden, die in Aussparungen verlaufen.

9. Werkzeug zum Einsetzen des Einsatzes (25) nach den Ansprüchen 5 und 6, **dadurch gekennzeichnet, dass** es Folgendes umfasst:
- ein Einsatzhalter (26), der mit einer Platte (261) versehen ist, die mit Anschlägen (262) ausgestattet ist, die den Platz der Basis (251) des Einsatzes (25) begrenzen,
- einen Elektromagneten (263), der unter dem Platz des Einsatzes (25) angeordnet ist,
- einen Sensor (264), um das Vorhandensein des Einsatzes (25) an seinem Platz auf der Platte (261) zu detektieren, und
- einen Schalter, um die Betätigung des Elektromagneten (263) zu steuern, um den Einsatz (25) zu halten.

## Claims

1. Hot-water store (RECS), comprising a vertical cylindrical container (1) which is provided with an exchanger (14) that is fed by an external heat source, wherein the container (1) is provided with insulation which is covered by panelling (3), wherein the store (RECS) comprises the following:
A. a module (M), which is made up of the container (1) and an insulating shell (2) foamed directly onto the container (1) so as to form a cuboidal module (M),
B. panelling (3), which comprises at least
- a pedestal (31) carrying the module (M),
- two side walls (32), and
- a top part (33) through which the pre-fitted heat-carrier-liquid and hot-water connections pass,
C. wherein the side walls (32), which are composed of sheet metal, are connected to the pedestal (31) by mechanical connections (LM),
**characterized in that** the top part (33) is connected to the side walls (32) by mechanical connections (LM), and wherein the side walls (32) are connected to the module (M) by magnetic fasteners (FA) which are integrated into the upper part of the insulating shell (2) of the side parts (CG, CD) of the module (M).

2. Store (RECS) according to Claim 1,
**characterized in that**
the mechanical connection (LM) which connects each side wall (32) to the edge of the pedestal (31) is a tab-and-slot connection, wherein the side part (311) of the pedestal (31) has at least one slot (312) and the lower edge (321) of the side wall (32) has a tab (3211) which engages into said slot (312).

3. Store (RECS) according to Claim 1,
**characterized in that**
the top part (33) is connected at each lateral edge (331) to the upper edge (322) of the side wall (32) by a mechanical connection (LM) by way of latching of pins, carried by the edges of the top part (33), that extend into latching recesses of complementary form, said latching recesses being formed in the top side of the upper edge (322) of the side walls (32).

4. Store (RECS) according to Claim 1,
**characterized in that**
the two side parts (CG, CD) of the module (M) are provided in the upper part with magnetic fasteners (FA) which are integrated into the insulating shell (2).

5. Store (RECS) according to Claim 4,
**characterized in that**
the magnetic fastener (FA) is an insert (25) in the form of a lamella that has been bent to form an inverted V with a planar base (251), to which planar base the magnet (253) is attached, and that has its two legs (254) embedded into the thickness of the insulating shell (2).

6. Store (RECS) according to Claim 5,
**characterized**
**in that** the legs (254) have bent ends (255) and fixing openings (256) in order to promote the fixing of the foamed material of which the insulating shell (2) consists.

7. Store (RECS) according to Claim 1,
**characterized in that**
the container is a vertical cylindrical container which is provided with at least one exchanger (14) that is fed by a heat pump.

8. Store (RECS) according to Claim 1,
**characterized in that**
the module (M) comprises a container (1) which is provided with at least one pair of tube ends, connected to the exchanger, with the end of the cold-water inlet tube and with the end of the hot-water outlet tube (143, 153, 165, 166), which are pre-fitted in cutouts and, after the insulating shell (2) has been formed, are connected to connecting pipes (144, 154) which run in cutouts.

9. Tool for inserting the insert (25) according to Claims 5 and 6, **characterized in that** said tool comprises the following:
- an insert holder (26) provided with a plate (261) which is provided with stops (262) that delimit the position of the base (251) of the insert (25),
- an electromagnet (263) arranged below the position of the insert (25),
- a sensor (264) for detecting the presence of the insert (25) at its position on the plate (261), and
- a switch for controlling the actuation of the electromagnet (263) for holding the insert (25).

## Revendications

1. Ballon d'eau chaude (RECS), comprenant un réservoir cylindrique vertical (1) équipé d'un échangeur (14) alimenté par une source de chaleur externe, le réservoir (1) étant équipé d'une isolation recouverte d'un habillage (3), ledit ballon (RECS) comprenant les éléments suivants :
A. un module (M), composé du réservoir (1) et d'une enveloppe isolante (2) directement expansée sur le réservoir (1) pour former un module parallélépipédique (M),
B. un habillage (3), comprenant au moins
- un socle (31) qui supporte le module (M),
- deux parois latérales (32) et
- une partie supérieure (33) traversée par les raccords de liquide caloporteur et d'eau chaude préassemblés,
C. les parois latérales (32) en tôle étant reliées au socle (31) par des liaisons mécaniques (LM),
**caractérisé en ce que** la partie supérieure (33) est reliée aux parois latérales (32) par des liaisons mécaniques (LM), et dans lequel les parois latérales (32) sont reliées au module (M) par des fixations magnétiques (FA) intégrées dans la partie supérieure de l'enveloppe isolante (2) des parties latérales (CG, CD) du module (M).

2. Ballon (RECS) selon la revendication 1,
**caractérisé en ce que**
la liaison mécanique (LM) reliant chaque paroi latérale (32) au bord du socle (31) est une liaison à fente et patte, la partie latérale (311) du socle (31) ayant au moins une fente (312) et le bord inférieur (321) de la paroi latérale (32) ayant une patte (3211) qui s'engage dans cette fente (312).

3. Ballon (RECS) selon la revendication 1,
**caractérisé en ce que**
la partie supérieure (33) est reliée, au niveau de chaque bord latéral (331), au bord supérieur (322) de la paroi latérale (32) par une liaison mécanique (LM) par encliquetage de broches portées par les bords de la partie supérieure (33), qui s'étendent dans des évidements d'encliquetage de forme complémentaire, réalisés dans le côté supérieur du bord supérieur (322) des parois latérales (32).

4. Ballon (RECS) selon la revendication 1,
**caractérisé en ce que**
les deux parties latérales (CG, CD) du module (M) sont pourvues, dans la partie supérieure, de fixations magnétiques (FA) intégrées dans l'enveloppe isolante (2).

5. Ballon (RECS) selon la revendication 4,
**caractérisé en ce que**
la fixation magnétique (FA) est un insert (25) sous la forme d'une lamelle, qui est plié en un V inversé à base plane (251) sur lequel est fixé l'aimant (253) et dont les deux branches (254) sont noyées dans l'épaisseur de l'enveloppe isolante (2).

6. Ballon (RECS) selon la revendication 5,
**caractérisé en ce que**
les branches (254) ont des extrémités repliées (255) et des ouvertures de fixation (256) pour favoriser la fixation du matériau expansé constituant l'enveloppe isolante (2).

7. Ballon (RECS) selon la revendication 1,
**caractérisé en ce que**
le réservoir est un réservoir cylindrique vertical équipé d'au moins un échangeur (14) alimenté par une pompe à chaleur.

8. Ballon (RECS) selon la revendication 1,
**caractérisé en ce que**
le module (M) comprend un réservoir (1) pourvu d'au moins une paire d'extrémités de tuyaux reliées à l'échangeur, l'extrémité du tuyau d'entrée d'eau froide et l'extrémité du tuyau de sortie d'eau chaude (143, 153, 165, 166), prémon-tées dans des évidements et raccordées, après la formation de l'enveloppe isolante (2), à des tuyaux de liaison (144, 154) passant dans des évidements.

9. Outil d'insertion de l'insert (25) selon les revendications 5 et 6, **caractérisé en ce qu'**il comprend les éléments suivants :
- un support d'insert (26) pourvu d'une plaque (261) équipée de butées (262) qui limitent l'emplacement de la base (251) de l'insert (25),
- un électroaimant (263) agencé sous l'emplacement de l'insert (25),
- un capteur (264) pour détecter la présence de l'insert (25) à son emplacement sur la plaque (261), et
- un commutateur pour commander l'actionnement de l'électroaimant (263) afin de maintenir l'insert (25).
